# EUROPÄISCHE PATENTSCHRIFT

(11) **EP 1 396 414 B1**
(45) Veröffentlichungstag und Bekanntmachung des Hinweises auf die Patenterteilung: **15.08.2007**
(21) Anmeldenummer: 03013920.8
(22) Anmeldetag: 20.06.2003
(51) Int. Cl.: B62B 3/02, B62B 3/12

(54) **Transportwagen mit Klapprädern und Deichsel**
Transport trolley with foldable wheels and drawbar
Chariot de transport avec roues pliantes et timon

(30) Priorität: 04.09.2002 DE 10240895
(43) Veröffentlichungstag der Anmeldung: 10.03.2004
(73) Patentinhaber: Abel, Helmut, 98000 Monte Carlo (MC)
(72) Erfinder: Abel, Helmut, 98000 Monte Carlo (MC)
(74) Vertreter: Patentanwälte Westphal, Mussgnug & Partner

(56) Entgegenhaltungen:
- WO-A-00/73122
- DE-U1- 20 105 217
- US-A- 5 772 222

## Beschreibung

Die Erfindung betrifft einen Transportwagen nach dem Oberbegriff des Patentanspruchs 1.

Ein Transportwagen dieser Art ist aus WO 00/73122 (beinhaltet die Merkmale des Oberbegriffs des Anspruchs 1) bekannt. Er weist einen etwa senkrecht nach oben stehenden Bügel zum Schieben des Transportwagens auf. Der Bügel ist einklappbar an der Ladeplattform angebracht. Ferner sind an der Unterseite der Ladeplattform um horizontale Achsen einklappbare Räder angebracht, wobei die vorderen Räder außerdem um vertikale Achsen schwenkbar sind. Der bekannte Transportwagen ist nicht ganz einfach zu bedienen, da er verhältnismäßig komplizierte Mechanismen zur Verriegelung des Schiebebügels und der Räder sowohl in der Fahrstellung als auch in der Einklappstellung aufweist. Außerdem kann der bekannte Transportwagen nicht ganz einfach in seiner Schieberichtung gehalten werden, da die schwenkbaren Vorderräder nicht jede Bewegung leicht mitmachen und möglicherweise seitlich blockieren. Schließlich ist auch die Herstellung insofern kompliziert, als unterschiedliche Räder für das vordere bzw. rückwärtige Ende des Transportwagens hergestellt und angebracht werden müssen. Dies erschwert außerdem nochmals die Blockierung der verschiedenen Räder. Die schwenkbaren vorderen, sogenannten Lenkrollen müssen stets ein Axiallager aufweisen, um einerseits den Lastendruck des Transportwagens aufnehmen zu können und andererseits leichtgängig drehbeweglich zu sein. Diese Lenkrollen sind daher zwangsläufig vor allem im Lagerbereich breit bzw. dick, was bedingt, dass sie auch in eingeklapptem Zustand ziemlich dick sind, was die Gesamtdicke des zusammengeklappten Transportwagens vergrößert. Überdies können sich die Lenkrollen bereits an kleinen Hindernissen (Kabeln, Querrinnen, Teppichrändern etc.) unabsichtlich in eine falsche Richtung verdrehen, so dass man den Transportwagen beim Schieben immer wieder in die beabsichtigte Laufrichtung zwingen muss. Die komplizierte Ausbildung des bekannten Transportwagens ergibt insbesondere durch die vielen erforderlichen Bauelemente ein hohes Eigengewicht des Wagens, was beim Auf- und Zusammenklappen des Transportwagens sowie beim Transport selbst ein weiterer Nachteil ist.

Durch die vorliegende Erfindung soll ein hochbelastbarer Transportwagen mit horizontaler Ladeplattform und großen Laufrädern geschaffen werden, der einfach herstellbar und betätigbar ist, dabei weniger und leichtere Bauteile besitzt als der bekannte Transportwagen und der schnell und problemlos weitgehend zusammenklappbar ist, um eine extrem flache Form anzunehmen, die sich insbesondere auch in engen Fahrzeugkofferräumen bequem unterbringen läßt. Dabei soll das Gewicht des Transportwagens sehr niedrig sein und insbesondere ein sicheres Fahren in die gewünschte Richtung ohne nennenswerte Behinderungen durch Bodenunebenheiten möglich sein.

Diese Aufgabe wird erfindungsgemäß bei einem Transportwagen der eingangs genannten Art durch die Merkmale des Anspruchs 1 gelöst.

In den Unteransprüchen sind vorteilhafte Ausgestaltungen der Erfindung unter Schutz gestellt.

Die Befestigung der Deichsel an einem Drehschemel ermöglicht das problemlose Verfahren des Transportwagens in jede gewünschte Richtung ohne jede Behinderung. Der Drehschemel kann beispielsweise auch bei nicht eingeklappter Deichsel um 180° gegenüber der Ladeplattform verschwenkt werden. Dadurch kann der Deichselgriff über das hintere Ende der Ladeplattform vorstehen, und der Transportwagen kann an diesem Deichselgriff getragen oder, falls die umgeklappten Räder über den Umriss der Ladeplattform vorstehen, wie es durch geeignete Formgebung der Ladeplattform ohne Weiteres möglich ist, auch mühelos auf einem der Klappräder verfahren werden.

Anhand der Figuren wird eine bevorzugte Ausführungsform der Erfindung näher erläutert. Es zeigt:
Fig.1 eine schematische Seitenansicht des erfindungsgemäßen Transportwagens mit in Fahrstellung befindlichen Klapprädern, wobei der Vorderteil der Deichsel weggebrochen ist,
Fig.2 eine Untersicht des in Fig.1 gezeigten Transportwagens mit in Klappstellung befindlichen Klapprädern,
Fig.3 eine vergrößerte Teilansicht der Ladeplattform und eines eingeklappten Klapprades mit der zugehörigen Verriegelungseinrichtung, gesehen parallel zur Längsmittellinie des Transportwagens in Fahrrichtung nach vorne,
Fig.4 eine teilweise geschnittene vergrößerte Teilansicht eines Klapprades mit der zugehörigen Lager- und Verriegelungseinrichtung desselben,
Fig.5 eine der Fig.4 entsprechende Teilansicht, die gegenüber Fig.4 um 90° verdreht ist,
Fig.6 eine vergrößerte Ansicht eines Verriegelungselementes für die Klappräder,
Fig.7 eine schematische Darstellung des Transportwagens in zusammengeklapptem Zustand bei Beförderung durch einen Benutzer und
Fig.8 einen Längsschnitt durch die Deichsel mit Handgriff,
Fig.9 eine der Figur 4 entsprechende Teilansicht eines Klapprades mit einer anderen Ausführungsform der zugehörigen Lager- und Verriegelungseinrichtung desselben und
Figur 10 eine axiale Ansicht des oberen Endes der in Fig.9 gezeigten Traggabel.

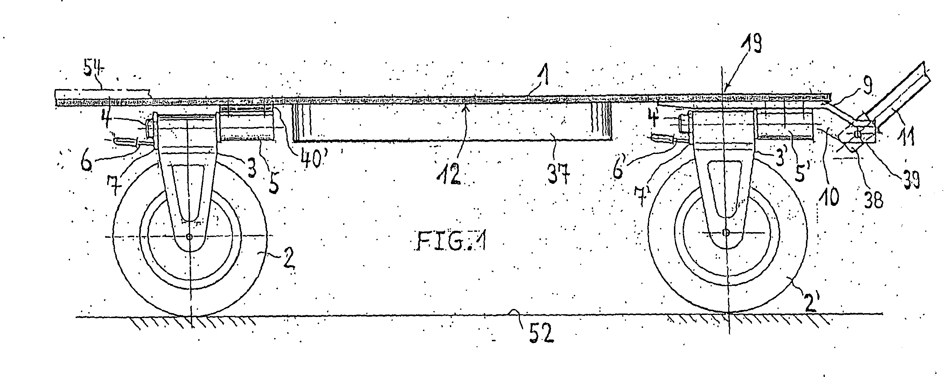

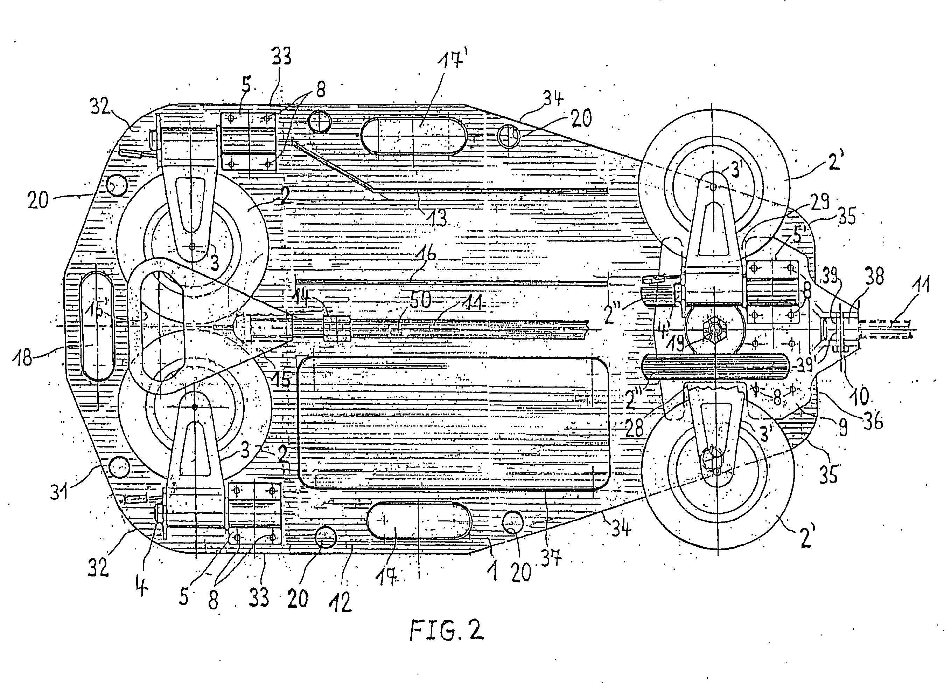

Bei der Darstellung der Fig.1 befinden sich sämtliche Klappräder 2,2' in einer von der Ladeplattform 1 senkrecht abstehenden Fahrstellung. Die dünnwandige, im Wesentlichen ebene Ladeplattform läuft auf zwei vorderen Klapprädern 2' und zwei hinteren Klapprädern 2, von denen in Fig.1 jeweils nur eines zu sehen ist. Jedes Klapprad 2,2' ist in einer Traggabel 3, 3' drehbar gelagert. Jede Traggabel 3, 3' ist um eine parallel zur Längsmittellinie 50 (Fig.2) des Transportwagens 1 verlaufende Drehachse 4,4' zwischen der in Fig.1 gezeigten Fahrstellung der Klappräder 2,2' und den in Fig.2 gezeigten Klappstellungen einklappbar (hintere Klappräder 2) bzw. ausklappbar (vordere Klappräder 2'). In Fig.2 ist zusätzlich jedes der vorderen Klappräder 2' auch in Fahrstellung 2" dargestellt, um den Umklappvorgang zu verdeutlichen.

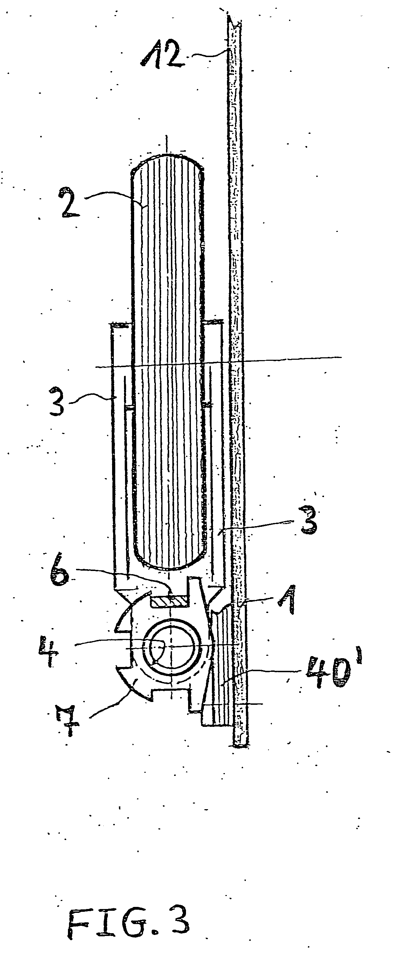

Wie aus den Figuren 3 bis 5 ersichtlich, weist jede Traggabel 3,3' eine im Wesentlichen U-förmig ausgebildete Ausnehmung 22 (Fig.5) zwischen ihren Gabelschenkeln 22' auf, in welcher sich fast spielfrei eine Blattfeder 6 des Klappradverriegelungsmechanismus bewegen kann, und in welcher darunter jeweils ein Klapprad 2,2' aufgenommen ist. Jedes Klapprad 2,2' ist in den Gabelschenkeln 22' um eine Radachse 51 drehbar gelagert.

Jede Traggabel 3,3' weist eine senkrecht zur Radachse 51 verlaufende Lagerbohrung 46 auf, die eine parallel zur Ladeplattform 1 verlaufende Traggabel-Drehachse 4,4' gleitend umfasst. Das aus der Lagerbohrung 46 vorstehende Ende der Traggabel-Drehachse 4,4' wird von einem U-förmigen Abschnitt eines Befestigungselementes 5,5' eng umfasst und ist an diesem befestigt. Die parallel zur Ladeplattform 1 verlaufenden Endabschnitte der Befestigungselemente 5,5' enthalten Schraubenlöcher 8, durch die in der Ladeplattform 1 verankerte und durch Muttern 49 festgelegte Schraubenbolzen 48 geführt sind. Zwischen den Befestigungselementen 5 und der Ladeplattform 1 sind zu einem weiter unten geschilderten Zweck Distanzscheiben 40'eingefügt, die ebenfalls von den Gewindebolzen 48 durchsetzt werden. Das Befestigungselement 5,5' der Traggabel-Drehachse 4,4' kann auch andersartig ausgebildet sein, beispielsweise als zylindrischer Befestigungsblock mit quadratischem, rechtekkigem oder auch andersartigem Querschnitt und mit einer zentralen hohlzylindrischen Ausnehmung für die Aufnahme des rohrförmigen hinteren Endes der freitragenden Traggabel-Drehachse per Festsitz. Die Befestigungsschrauben (Gewindebolzen 48, Fig.5) werden dann in das Innengewinde des zylindrischen Befestigungsblockes eingeschraubt. Die Traggabel-Drehachse 4 muss nicht unbedingt freitragend ausgebildet werden, sondern kann auch beidseitig befestigt sein.

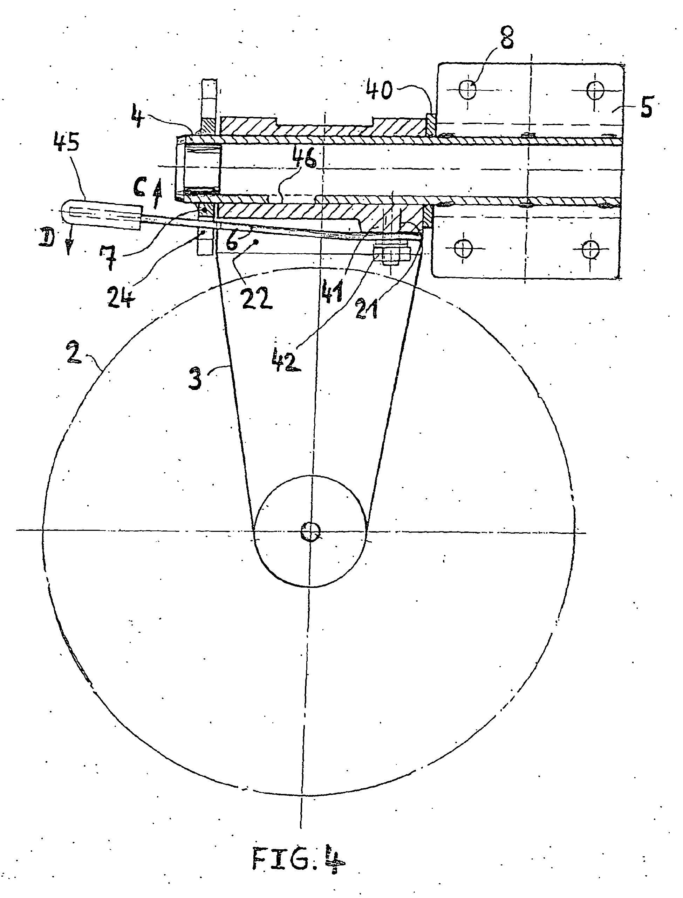

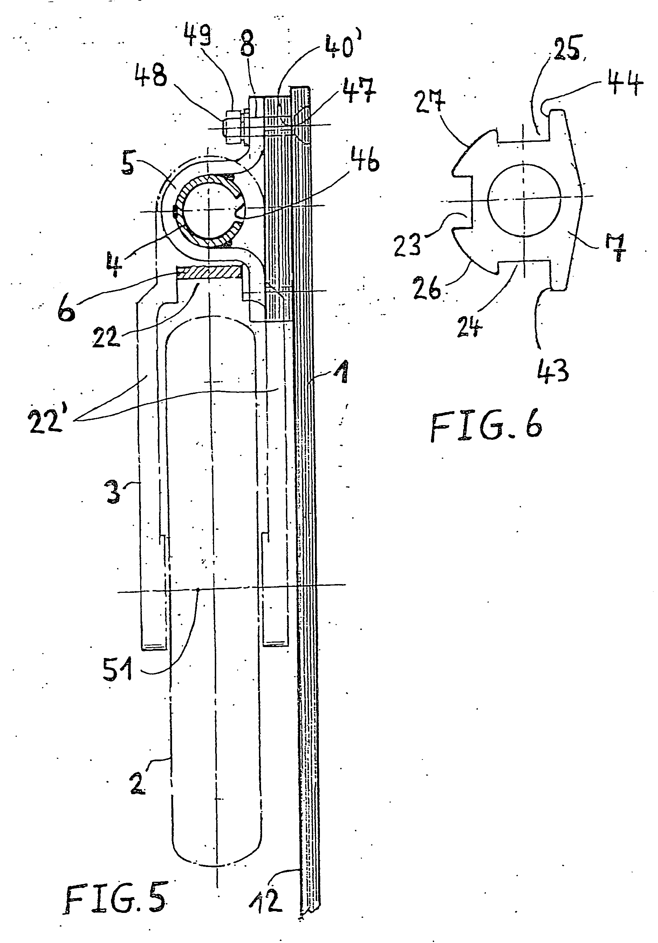

Nahe dem freitragenden Ende der Traggabel-Drehachse 4,4', die bei dieser Ausführungsform rohrförmig ausgebildet ist, ist auf der Außenseite der Drehachse das in Fig.6 näher dargestellte Traggabel-Blockierelement 7,7', beispielsweise durch Schweißen, befestigt. In ähnlicher Weise kann das entgegengesetzte Rohrende in der U-förmigen Ausbauchung des Befestigungselements 5,5' durch Schweißen festgelegt sein. Das Blockierelement 7,7' weist an seinem Umfangsrand drei Einkerbungen 23,24,25 jeweils im Winkelabstand von 90° auf. Zwischen den Einkerbungen 23,24,25 sind Kurvenbahnen 26,27 vorgesehen. An einer Verdickung 41 der Traggabel 3,3', die innerhalb der U-förmigen Ausnehmung 22 liegt, ist mittels eines Gewindebolzens 21 und einer darauf sitzenden Mutter 42 das Ende einer Blattfeder 6 eingespannt, deren entgegengesetztes freies Ende eine Fingerschutzkappe 45 trägt. Die Blattfeder kann in jede der Einkerbungen 23,24,25 einrasten, da sie derart gegen den Umfang des Blockierelements 7,7' vorgespannt ist, dass sie bei Drehung der Traggabel 3,3' automatisch in die nächstgelegene Einkerbung 23,24,25 in Richtung des Pfeils C (Fig.4) einrastet. Durch Anheben der Fingerschutzkappe 45 in Richtung des Pfeils D kann die Blattfeder 6 aus der jeweiligen Einkerbung ausgehoben werden und über eine angrenzende Kurvenbahn 26 oder 27 gleiten, bis sie in die nächste Einkerbung 23,24,25 einschnappt. In jeder der Einkerbungen 23,24,25 legt die Blattfeder 6,6' die zugehörige Traggabel 3,3' in der Fahrstellung 2" bzw. in einer Klappstellung zu beiden Seiten der Fahrstellung fest. In jeder der Klappstellungen, die sich um 180° um die Drehachse 4,4' unterscheiden, liegt die jeweilige Drehgabel 3,3' sehr nahe an der Unterseite 12 der Ladeplattform 1, so dass die Gesamtdicke des zusammengeklappten Transportwagens außerordentlich gering ist.

Vorteilhafterweise sind alle Klappräder 2,2' einschließlich der Traggabeln 3,3' und des zugehörigen Klappmechanismus beim erfindungsgemäßen Transportwagen vollständig gleich ausgebildet und können ja nach Anwendungszweck an jeder Stelle auf der Unterseite 12 der Ladeplattform 1 positioniert werden. Das bedeutet, dass man ohne besondere Konstruktionsänderungen nach dem gleichen Prinzip und im Wesentlichen den gleichen Teilen lange, kurze, breite oder schmale Transportwagen herstellen kann. Am hinteren Ende des Transportwagens können beispielsweise auch vier oder mehr Klappräder 2,2' in Reihe nebeneinander angebracht werden, wodurch die Belastbarkeit des Transportwagens stark erhöht werden kann. Dazu ist ebenfalls keine Änderung der Einzelteile und der Konstruktion erforderlich.

Während der erwähnte bekannte Transportwagen infolge seiner zahlreichen notwendigen Teile verhältnismäßig schwer ist, läßt sich der erfindungsgemäße Wagen demgegenüber bei gleich großer Ladefläche außerordentlich leichtgewichtig herstellen. Dadurch ist seine Handhabung und sein Transport außerordentlich zweckmäßig.

An den von den Kurvenbahnen 26,27 abliegenden Seiten sind die diametral gegenüberliegenden Einkerbungen 24 und 25 mit einer höheren Seitenwand 43 bzw. 44 versehen, damit die Blattfeder 6,6' nicht in dieser Richtung die Einkerbung verlassen kann. Somit ist eine außerordentlich sichere Fixierung der Klappräder 2,2' in der Fahrstellung gemäß Fig.1 bzw. einer der Klappstellungen gemäß Fig.2 möglich.

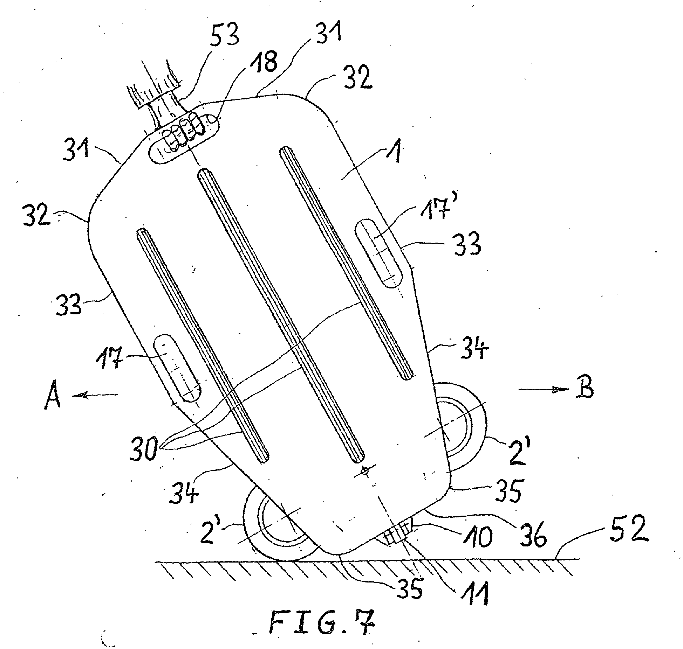

Wie insbesondere aus Fig.2 ersichtlich, werden die Drehachsen 4 der hinteren Klappräder 2 nahe am Außenrand 33 der Ladeplattform 1 befestigt, so dass die beiden zugehörigen Klappräder 2 nach innen zur Längsmittellinie 50 hin eingeklappt werden können, während die Drehachsen 4' der vorderen Klappräder 2' nahe der Längsmittellinie 50 festgelegt werden, so dass die beiden Klappräder 2' noch innerhalb der Fortsetzung des Seitenrandes 33 der Ladeplattform 1 zu liegen kommen. Dies wird durch die besondere Formgebung der Ladeplattform 1 ermöglicht. Diese Form wird durch einen leicht ausgebauchten Hinterrand 31, zwei parallele gerade Längsseitenwände 33, die durch Abrundungen 32 jeweils in den Hinterrand 31 übergehen, zwei nach vorne an die Längsseitenränder 33 anschließende, nach vorn aufeinander zu laufende, den vorderen Teil der Ladeplattform 1 also verjüngende Seitenränder 34 und einen die Seitenränder 34 verbindenden quer verlaufenden Vorderrand 36 bestimmt. Durch die Verjüngung der Ladeplattform 1 im vorderen Bereich, d.h. im Bereich der Seitenränder 34, können die in die Klappstellung gemäß Fig.2 nach außen umgeklappten vorderen Klappräder 2' seitlich über die Seitenränder 34 hinausstehen, so dass der in zusammengeklapptem Zustand befindliche Transportwagen in der aus Fig.7 ersichtlichen Art auf einem seiner vorderen Klappräder 2' auf dem Boden 52 verfahren werden kann. Dabei wird das entgegengesetzte hintere Ende von der Hand 53 des Benutzers gehalten bzw. gezogen. Zur Erleichterung dieses Haltens ist nahe dem Hinterrand 31 ein ovaler Durchbruch 18 in der Ladeplattform 1 vorgesehen. Der Durchbruch dient als Griff und ist vorzugsweise an seinen Kanten abgefast. Zwei weitere im Wesentlichen gleiche Durchbrüche 17 und 17' nahe den Längsseitenrändern 33 können ebenfalls als Griff, in diesem Fall zum Tragen des Transportfahrzeugs vorgesehen sein. Die Seitenränder 34 gehen ebenfalls über Abrundungen 35 in den Vorderrand 36 über. Beim Abrollen des zusammengeklappten Transportwagens auf einem der vorderen Klappräder 2' gemäß Fig.7 kann derselbe entweder in Richtung des Pfeils A gezogen oder aber in Richtung des Pfeils B geschoben werden.

Die verjüngten Seitenränder 34 der Ladeplattform 1 sind auch beim Ziehen des Transportwagens mittels der ausgeklappten Deichsel 11 sehr vorteilhaft. Wenn nämlich eine starke Richtungsänderung beim Ziehen des Transportwagens vorgenommen werden soll, beispielsweise bis zu 90° abweichend von der bisherigen Fahrtrichtung, müsste das vordere Ende des Drehschemels 9 so weit über das vordere Ende der Ladeplattform 1 vorstehen, dass es bei Drehung des Drehschemels 9 um bis zu 90° bei jeder Stellung über den Rand der Ladeplattform 1 vorstehen würde. Andernfalls würde die Ladeplattform eine schräge Führung der Deichsel 11 durch die ziehende Hand des Benutzers behindern und es wäre eine freie Drehung des Drehschemels nicht möglich. Durch die verjüngten Seitenränder 34 steht das vordere Ende des Drehschemels 9 jedoch in jeder Drehstellung über die Umrandung der Ladeplattform 1 hinaus. Somit ist jederzeit eine Richtungsänderung des Transportwagens um 90° und bei geeigneter Formgebung der Ladeplattform 1 sogar darüber hinaus ohne Behinderung der Deichsel möglich. Dadurch kann der Drehschemel 9 in Längsrichtung des Transportwagens stark verkürzt und somit die Gesamtlänge des Transportwagens beträchtlich reduziert werden.

Aus der Vorderseite der Ladeplattform 1 stehen längs verlaufende parallele Antirutsch-Stege 30 für auf der Ladeplattform zu transportierende Fördergüter (nicht gezeigt) kaum merklich vor. Aus der Unterseite 12 der Ladeplattform 1 stehen Versteifungsrippen 13 und 16 leicht vor, die in jedem Falle niedriger sind als die Laufräder 2,2' und deren Traggabeln 3,3' in der Klappstellung gemäß Fig.2. Der weiteren Versteifung dient auch ein aus der Unterseite 12 leicht vorragender Kasten 37, der im Wesentlichen parallel zur Ladeplattform 1 angeordnet ist und außer der Versteifung auch zum Verstauen von Vertäuungsgurten, Gummispannern mit Hakenenden und dergl. dient. Der Kasten 37 hat wie auch die Versteifungsrippen 13,16 maximal die Höhe der Traggabeln 3,3' unterhalb der Unterseite 12 der Ladeplattform 1. Es können auch mehrere solcher Kästen 37 auf der Unterseite 12 vorgesehen werden. Im Bereich des verjüngten vorderen Teils der Ladeplattform 1 ist an der Unterseite 12 ein Drehschemel 9 um eine Drehachse 19 drehbar an der Ladeplattform angebracht, der eine aus dem Vorderrand 36 der Ladeplattform vorstehende und nach unten abgekröpfte Ausbuchtung 10 aufweist, wie aus den Figuren 1 und 2 ersichtlich. Die Dicke des Drehschemels 9 entspricht dabei der Dicke der Distanzscheibe 40', so dass die Befestigungselemente 5 und 5' der hinteren bzw. vorderen Klappräder 2,2' in gleichem Abstand unterhalb der Unterseite 12 der Ladeplattform 1 liegen. Dadurch wird eine im Wesentlichen horizontale Lage der Ladeplattform gewährleistet. Die abgekröpfte Ausbuchtung 10 des Drehschemels 9 ist gabelförmig ausgebildet und nimmt einen am hinteren bzw. unteren Ende der Deichsel 11 sitzenden Deichselklotz 38 bündig auf, der eine querverlaufende zylindrische Durchgangsöffnung 39 und einen diese Durchgangsöffnung 39 durchsetzenden und mit der Ausbuchtung 10 fest verschraubten Gewindebolzen enthält. Dadurch ist die Deichsel 11 in vertikaler Richtung verschwenkbar und kann andererseits in horizontaler Richtung um die Drehachse 19 mitsamt dem Drehschemel 9 zur Lenkung des Transportwagens verschwenkt werden.

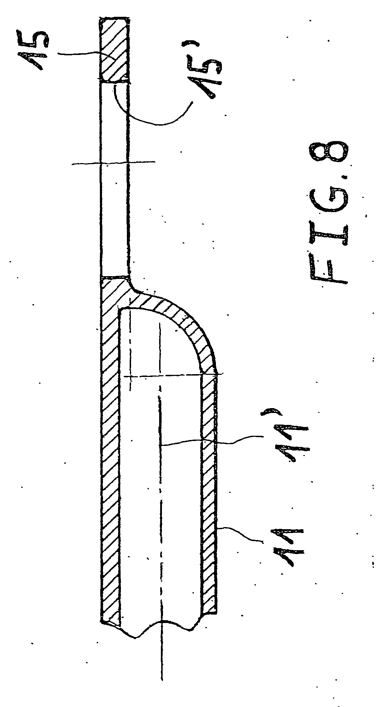

Wenn sich die vorderen Klappräder 2' in der in Fig.2 gezeigten äußeren Klappstellung befinden, lässt sich die so gelagerte Deichsel 11 zwischen die beiden Traggabeln 3' parallel und nahe der Unterseite 12 der Ladeplattform 1 nach hinten klappen, so dass sie aus der am rechten Ende der Fig.2 gestrichelt angedeuteten Stellung in die fast an der Unterseite 12 anliegende rückwärtige Einklappstellung gemäß Fig.2 eingeklappt werden kann. In dieser Stellung kann sie in eine gabelförmige oder etwa U-förmige Haltespange 14 einschnappen, so dass sie an der Unterseite 12 festgelegt wird. Das äußere Ende der Deichsel 11 ist als flacher Handgriff 15 ausgebildet, der sich zur bequemen Führung durch eine Hand verbreitert und eine entsprechende ovale Öffnung 15' enthält. Aus Fig.8 ist ersichtlich, dass der Handgriff 15 mit der Öffnung 15' gegenüber der Längsachse 11' der Deichsel 11 seitlich leicht abgekröpft ist, so dass er in der Stellung der Fig.2 sich auf die Außenseite der eingeklappten hinteren Klappräder 2 außerhalb der Traggabeln 3 auflegt. Die Gesamtdicke zwischen der Oberseite der Ladeplattform 1 und der Unterseite des eingeklappten Deichselhandgriffs 15 ist daher nicht größer als diejenige zwischen der Oberseite und den Traggabeln 3, 3'. Somit ergibt sich insgesamt eine außerordentlich flache und leichte Bauweise des Transportwagens, der leicht transportiert, gelenkt und im zusammengeklappten Zustand verstaut werden kann.

Damit die Traggabeln 3' der vorderen Klappräder 2' von dem Drehschemel 9 beim seitlichen Einklappen in die Klappstellung gemäß Fig.2 nicht behindert werden, sind auf beiden Seiten des Drehschemels 9 in vertikaler Richtung gesehen U-förmige Ausnehmungen 28 und 29 vorgesehen, in die sich jeweils ein seitlicher Schenkel jeder Traggabel 3' in der Klappstellung einfügen kann.

Da alle vier Klappradeinheiten vollkommen gleich ausgeführt sind, ergibt sich ein großer Vorteil für die Serienfertigung des erfindungsgemäßen Transportwagens. Jedes Klapprad kann, wie dargelegt, je nach Wunsch in drei Lagen, d.h. eine Laufstellung und zwei entgegengesetzte Klappstellungen verschwenkt und in jeder dieser Stellungen verriegelt werden. Daher wäre es im Rahmen der Erfindung beispielsweise für die Gestaltung eines höher belastbaren Transportwagens auch möglich, hinten etwa vier dieser identischen Klappradeinheiten in Reihe nebeneinander anzuordnen, wobei beim Zusammenklappen des Transportwagens die beiden inneren Klappräder einfach zur Mittellinie 50 hin und die beiden äußeren Klappräder nach außen geschwenkt werden können.

Zwischen jeder Radtraggabel 3,3' und dem Befestigungselement 5,5' der jeweiligen Klappeinheit befindet sich eine runde Distanzscheibe 40, die eine einwandfreie Drehung und gleichzeitig axiale Halterung der Traggabeln 3,3' gewährleistet (siehe Fig.4). Am anderen axialen Ende wird jede Traggabel 3,3' jeweils von dem mit Spiel an der Traggabel anliegenden Traggabel-Blockierelement 7,7' gehalten.

Am linken Ende der Fig.1 ist noch eine alternative Ausführungsform der Ladeplattform mit einer auflaminierten Oberschicht 54 angedeutet, die mit der Ladeplattform 1 derart verbunden ist, dass eine gemeinsame, etwas stärkere Ladefläche gebildet wird.

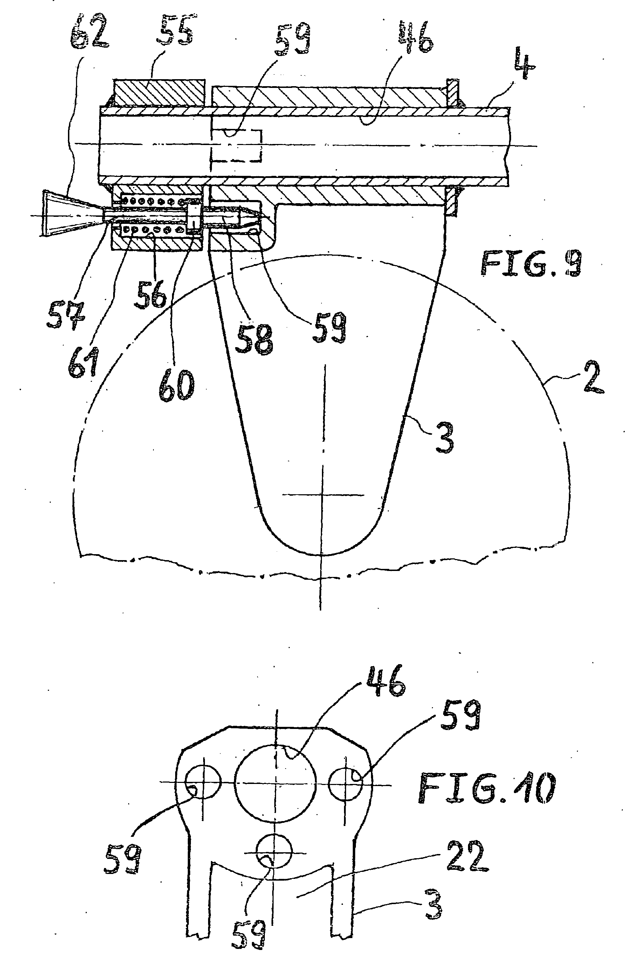

Eine andere Ausführungsform des Klapprad-Verriegelungsmechanismus ist in den Figuren 9 und 10 dargestellt. Statt des Traggabel-Blockierelements 7,7' wie in den Figuren 4 und 6 dargestellt, ist bei dieser Ausführungsform an der Traggabel-Drehachse 4,4' ein dieselbe umfassendes Führungselement 55 befestigt, das radial außerhalb der Traggabel-Drehachse 4,4' wenigstens eine hohlzylindrische Ausnehmung 56 zur gleitenden Aufnahme eines Verriegelungsbolzens 57 enthält, dessen Spitzenabschnitt 58 durch axiale Verschiebung des Verriegelungsbolzens 57 in eine hohlzylindrische Ausnehmung 59 der jeweiligen Traggabel 3,3' einführbar ist. Dadurch wird eine Verriegelung des Klapprades 2,2' bzw. der Traggabel 3,3' in einer Laufstellung erreicht. Da aber bei der dargestellten Ausführungsform 3 jeweils um 90° versetzte hohlzylindrische Ausnehmungen 59 in jeder Traggabel 3,3' vorgesehen sind, läßt sich der Spitzenabschnitt 58 des Verriegelungsbolzens 57 wahlweise auch in eine der beiden anderen Ausnehmungen 59 einführen , so dass eine Verriegelung in zwei entgegengesetzten Klappstellungen des Klapprades 2,2' möglich ist. Diese Aufnahme des Spitzenabschnitts 58 in der entsprechenden Ausnehmung 59 kann im Gegensatz zu der zum leichteren Verständnis übertrieben gezeichneten Darstellung der Figuren 9 und 10 nahezu spielfrei erfolgen.

Die Führung des Verriegelungsbolzens 57 innerhalb der Ausnehmung 56 des Führungselements 55 kann ebenfalls nahezu spielfrei erfolgen. Zur Belastung in die Verriegelungsstellung weist der Verriegelungsbolzen 57 innerhalb der Ausnehmung 56 einen Bund 60 auf, der durch eine Spiral-Druckfeder 61 in Richtung zum Spitzenabschnitt 58 hin belastet ist, so dass sich der Spitzenabschnitt 58 nur durch Betätigung eines außerhalb des Führungselements 55 sich erweiternden Handgriffs 62 aus der Ausnehmung 59 herausziehen lässt.

Bei einer weiteren alternativen Ausführungsform weist nicht, wie in den Figuren 9 und 10 dargestellt, die Traggabel 3,3' drei jeweils um 90° gegeneinander versetzte hohlzylindrische Ausnehmungen 59, sondern nur eine einzige, nämlich die mittlere der drei Ausnehmungen 59 auf, während im Führungselement 55 drei jeweils um 90° gegeneinander versetzte Ausnehmungen 56 vorgesehen sind. In diese Ausnehmungen 56 kann der Verriegelungsbolzen 57 wahlweise eingesetzt werden. In diesem Fall muss natürlich der Bund 60 wegfallen, da sonst der Verriegelungsbolzen 57 nicht aus der Ausnehmung 56 herausgezogen werden könnte. Für viele Fälle ist diese einfachere Art der Verriegelung ausreichend.

### BEZUGSZEICHENLISTE

| Pos. | Bezeichnung | Pos. | Bezeichnung |
|---|---|---|---|
| 1 | Ladeplattform | 36 | Vorderrand |
| 2,2' | Klappräder | 37 | Kasten |
| 3,3' | Traggabel | 38 | Deichselklotz |
| 9,4' | Traggabel-Drehachse | 39 | zylindr.Durchgangsöffnung |
| 5,5' | Befestigungselement | 40,40' | Distanzscheiben |
| 6,6' | Rastelement | 41 | Verdickung |
| 7,7' | Traggabel-Blockierelement | 42 | Mutter |
| 8 | Schraubenlöcher | 43,44 | höhere Seitenwand |
| 9 | Drehschemel | 45 | Fingerschutzkappe |
| 10 | Drehschemel-Ausbuchtung | 46 | Lagerbohrung |
| 11 | Deichsel | 47 | Schraubenlöcher |
| 11' | Deichsellängsachse | 48 | Gewindebolzen |
| 12 | Unterseite | 49 | Mutter |
| 13 | Versteifungsrippe | 50 | Längsmittellinie |
| 14 | Haltespange | 51 | Radachse |
| 15 | Deichselgriff | 52 | Boden |
| 15' | Öffnung | 53 | Hand |
| 16 | Versteifungsrippe | 54 | Oberschicht |
| 17,17' | Durchbrüche als Handgr. | 55 | Führungselement |
| 18 | Durchbruch als Griff | 56 | hohlzylindr.Ausnehmung |
| 19 | Drehachse | 57 | Verriegelungsbolzen |
| 20 | Durchgangsbohrungen | 58 | Spitzenabschnitt |
| 21 | Gewindebolzen | 59 | hohlzylindr.Ausnehmung |
| 22 | U-förmige Ausnehmung | 60 | Bund |
| 22' | Gabelschenkel | 61 | Spiral-Druckfeder |
| 23 | Einkerbungen | 62 | Handgriff |
| 24 | " | | |
| 25 | " | | |
| 26,27 | Kurvenbahnen | | |
| 28,29 | U-förmige Ausnehmungen | | |
| 30 | Antirutsch-Stege | | |
| 31 | Hinterrand | | |
| 32 | Abrundungen | | |
| 33 | Längsseitenränder | | |
| 34 | Seitenränder | | |
| 35 | Abrundungen | | |

## Patentansprüche

1. Transportwagen mit einer horizontalen Ladeplattform (1), die auf über je eine Traggabel (3,3') gelagerten Klapprädern (2,2') läuft, und mit einem vertikal schwenkbaren Bügel (11), wobei jede Traggabel um eine zur Ladeplattform parallele Achse (4,4') schwenkbar an der Ladeplattform (1) gelagert und in einer senkrecht von der Unterseite (12) der Ladeplattform (1) abstehenden Fahrstellung und in wenigstens einer parallel zur Ladeplattform liegenden Klappstellung verriegelbar ist, **dadurch gekennzeichnet, dass** der vertikal schwenkbare Bügel als Deichsel (11) ausgebildet ist, die mittels eines horizontal verschwenkbaren Drehschemels (9) mit der Unterseite (12) der Ladeplattform (1) verbunden ist, dass die Deichsel (11) am Drehschemel (9) derart angelenkt ist, dass sie in eine parallel zur Unterseite (12) der Ladeplattform (1) liegende Klappstellung einklappbar ist, dass die Deichsel (11) in der Einklappstellung verriegelbar ist, dass axial außerhalb jeder Traggabel (3,3') je ein Traggabel-Blockierelement (7,7') an der Traggabel-Drehachse (4,4') befestigt ist, das mit einem mit der Traggabel (3,3') fest verbundenen Rastelement (6) derart zusammenwirkt, dass die Traggabel (3,3') in der Fahrstellung und wenigstens einer Klappstellung lösbar verriegelt wird.

2. Transportwagen nach Anspruch 1, **dadurch gekennzeichnet, dass** die Deichsel (11) einen flachen Deichselgriff (15) aufweist, der gegen die Deichselachse (11') der Deichsel (11) derart abgekröpft ist, dass seine Breitseite in der Einklappstellung der Deichsel (Fig.2) parallel zur Unterseite (12) der Ladeplattform (1) und von dieser weiter entfernt liegt als die Längsachse (11').

3. Transportwagen nach Anspruch 1 oder 2, **dadurch gekennzeichnet, dass** zur Verriegelung der Deichsel (11) in der Einklappstellung (Fig.2) an der Unterseite (12) der Ladeplattform (1) eine nach unten offene Haltespange (14) zum Einschnappen der Deichsel (11) befestigt ist.

4. Transportwagen nach Anspruch 2 oder 3, **dadurch gekennzeichnet, dass** der Deichselgriff (15) in eingeklapptem Zustand der Deichsel (11) nicht weiter von der Unterseite (12) absteht als der äußere Schenkel jeder Traggabel (3,3') in eingeklapptem Zustand.

5. Transportwagen nach einem der vorangehenden Ansprüche, **dadurch gekennzeichnet, dass** der Drehschemel (9) im Bereich jeder Traggabel (3') eine U-förmige Ausnehmung (28,29) zur Aufnahme der Traggabel (3') in einer Klappstellung (Fig.2) aufweist.

6. Transportwagen nach einem der vorangehenden Ansprüche, **dadurch gekennzeichnet, dass** der Drehschemel (9) an seinem vorderen Ende eine nach unten abgekröpfte Ausbuchtung (10) zur vertikal schwenkbaren Lagerung der Deichsel (11) aufweist, wobei der Deichseldrehpunkt (39) unterhalb der Ladeplattform-Unterseite (12) liegt.

7. Transportwagen nach einem der vorangehenden Ansprüche, **dadurch gekennzeichnet, dass** jede Traggabel (3,3') zwischen ihren Schenkeln eine im Wesentlichen U-förmige Ausnehmung (22) zur Aufnahme je eines Klapprades (2,2') und eine senkrecht dazu und parallel zur Mittelebene des Klapprades verlaufende zylindrische Lagerbohrung (46) zur Aufnahme der feststehenden Traggabel-Drehachse (4,4') aufweist, von der die Traggabel (3,3') mittels der Lagerbohrung (46) drehbar gehaltert ist.

8. Transportwagen nach Anspruch 7, **dadurch gekennzeichnet, dass** jede Traggabel-Drehachse (4,4') mittels mindestens eines Befestigungselementes (5,5') und durch Schraubenlöcher (8) eingeführte Gewindebolzen (48) an der Unterseite (12) der Ladeplattform (1) angebracht ist.

9. Transportwagen nach einem der vorangehenden Ansprüche, **dadurch gekennzeichnet, dass** das Traggabel-Blockierelement (7,7') scheibenförmig ausgebildet ist und an seinem Umfangsrand Einkerbungen (23,24,25) aufweist, zwischen denen sich Kurvenbahnen (26,27) erstrecken und in die bei Drehung der Traggabel (3,3') ein vorgespanntes federndes Rastelement (6) einrasten kann, das durch Handbetätigung aus der jeweiligen Einkerbung (23,24,25) ausgehoben werden und bei abermaliger Drehung der Traggabel (3,3') über eine Kurvenbahn (26,27) gleiten und in die nächstliegende Einkerbung (23,24,25) einrasten kann.

10. Transportwagen nach Anspruch 9, **dadurch gekennzeichnet, dass** drei jeweils um 90° gegeneinander versetzte Einkerbungen (23,24,25) und zwei dazwischenliegende Kurvenbahnen (26,27) vorgesehen sind.

11. Transportwagen nach Anspruch 10, **dadurch gekennzeichnet, dass** die drei Einkerbungen (23,24,25) jeweils zwei entgegengesetzten Klappstellungen und einer dazwischenliegenden Fahrstellung der Traggabel (3,3') entsprechen.

12. Transportwagen nach einem der Ansprüche 9 bis 11, **dadurch gekennzeichnet, dass** das Rastelement (6) als Blattfeder ausgebildet ist, deren eines Ende an der Traggabel (3,3') befestigt ist und deren anderes Ende eine Fingerschutzkappe (45) trägt.

13. Transportwagen nach einem der vorangehenden Ansprüche, **dadurch gekennzeichnet, dass** alle Traggabeln (3,3') mit Klapprädern (2,2'), Lagern (4,4';5,5';46) und Verriegelungseinrichtungen (6,7,7') gleich ausgebildet sind.

14. Transportwagen nach einem der vorangehenden Ansprüche, **dadurch gekennzeichnet, dass** die Ladeplattform (1) nahe verschiedenen Seitenrändern (31,33,34) als Handgriffe dienende ovale Durchbrüche (17,17',18) enthält.

15. Transportwagen nach einem der vorangehenden Ansprüche,
**dadurch gekennzeichnet, dass** die Ladeplattform (1) nach vorne schräg aufeinander zu verlaufende Seitenränder (34) aufweist.

16. Transportwagen nach Anspruch 15, **dadurch gekennzeichnet, dass** die vorderen Klappräder (2') in ihrer nach außen umgeklappten Klappstellung über die schrägen Seitenränder (34), jedoch nicht über die die größte Breite der Ladeplattform (1) einschließenden geraden Ränder (33) hinausragen.

17. Transportwagen nach einem der vorangehenden Ansprüche, **dadurch gekennzeichnet, dass** an der Unterseite (12) der Ladeplattform (1) einer oder mehrere flache hohle Kästen (37) befestigt sind, wobei die Kästen (37) nicht weiter als die umgeklappten Traggabeln (3,3') aus der Unterseite (12) vorstehen.

18. Transportwagen nach einem der vorangehenden Ansprüche, **dadurch gekennzeichnet, dass** die Ladeplattform (1) Löcher (20) zum Vertäuen von Fördergut auf der Ladeplattform (1) enthält.

19. Transportwagen nach einem der vorangehenden Ansprüche, **dadurch gekennzeichnet, dass** aus der Oberseite der Ladeplattform (1) Antirutsch-Stege (30) geringfügig vorstehen.

20. Transportwagen nach einem der vorangehenden Ansprüche, **dadurch gekennzeichnet, dass** zwischen der Unterseite (12) der Ladeplattform (1) und dem Befestigungselement (5) für die hinteren Traggabel-Drehachsen (4) je eine Distanzscheibe (40') eingelegt ist, durch die Gewindebolzen (48) geführt sind und deren Dicke etwa der Dicke des Drehschemels (9) entspricht.

21. Transportwagen nach einem der Ansprüche 1 bis 8 und/oder 13 bis 20, **dadurch gekennzeichnet, dass** axial außerhalb jeder Traggabel (3,3') je ein Führungselement (55) an der Traggabel-Drehachse (4,4') befestigt ist, das radial außerhalb der Traggabel-Drehachse (4,4') wenigstens eine hohlzylindrische Ausnehmung (56) zur gleitenden Aufnahme eines Verriegelungsbolzens (57) enthält, dessen Spitzenabschnitt (58) durch axiale Verschiebung des Verriegelungsbolzens (57) in wenigstens eine hohlzylindrische Ausnehmung (59) der jeweiligen Traggabel (3,3') einführbar ist.

22. Transportwagen nach Anspruch 21, **dadurch gekennzeichnet, dass** die Traggabel (3,3') in der Fahrstellung und wenigstens einer Klappstellung lösbar verriegelbar ist.

23. Transportwagen nach Anspruch 21 oder 22, **dadurch gekennzeichnet, dass** drei jeweils um 90° gegeneinander versetzte hohlzylindrische Ausnehmungen (59) in jeder Traggabel (3,3') vorgesehen sind.

24. Transportwagen nach Anspruch 23, **dadurch gekennzeichnet, dass** die drei Ausnehmungen (59) jeweils zwei entgegengesetzten Klappstellungen und einer dazwischen liegenden Fahrstellung der Traggabel (3,3') entsprechen.

25. Transportwagen nach Anspruch 21 oder 22, **dadurch gekennzeichnet, dass** im Führungselement (55) zwei oder drei jeweils um 90° versetzte hohlzylindrische Ausnehmungen (56) und in der Traggabel (3,3') eine Ausnehmung (59) zur Aufnahme des Spitzenabschnitts (58) des Verriegelungsbolzens (57) vorgesehen sind.

26. Transportwagen nach einem der Ansprüche 21 bis 25, **dadurch gekennzeichnet, dass** der Verriegelungsbolzen (57) einen innerhalb der Ausnehmung (56) angeordneten Bund (60) aufweist, der durch eine Druckfeder (61) in Richtung zum Spitzenabschnitt (58) des Verriegelungsbolzens (57) hin belastet ist.

27. Transportwagen nach Anspruch 26, **dadurch gekennzeichnet, dass** der Verriegelungsbolzen (57) außerhalb der Ausnehmung (56) einen sich erweiternden Handgriff (62) aufweist.

## Claims

1. Cart with a horizontal loading platform (1), travelling on foldable wheels (2, 2') each mounted via a bearing fork (3, 3'), and with a vertically pivoting handle (11), wherein each bearing fork is mounted on the loading platform (1) pivotable about an axle (4, 4') parallel to loading platform and is securable in an operating position projecting perpendicularly from the bottom side (12) of the loading platform (1) and in at least one folded position parallel to the loading platform,
**characterised in that** the vertically pivoting handle is designed as a pole (11) connected with the bottom side (12) of the loading platform (1) via a horizontally pivoting swivel mount (9),
**in that** the pole (11) is linked to the swivel mount (9) in such a manner that it can be retracted into a folded-in position parallel to the bottom side (12) of the loading platform (1),
**in that** the pole (11) is securable in the folded-in position,
**in that** axially outside each bearing fork (3, 3') respectively one bearing fork blocking element (7, 7') is secured to the bearing fork pivot axle (4, 4') and cooperates with a detent element (6) securely connected to the bearing fork (3, 3') in such a manner that the bearing fork (3, 3') is releasably secured in the operating position and at least one folded-in position.

2. Cart according to Claim 1,
**characterised in that** the pole (11) includes a flat pole grip (15), which is cranked relative to the pole axis (11') of the pole (11) in such a manner that its broad side in the folded-in position of the pole (Fig. 2) lies parallel to the bottom side (12) of the loading platform (1) and further therefrom than the longitudinal axis (11').

3. Cart according to Claim 1 or 2,
**characterised in that** for securing the pole handle (11) in the folded-in position (Fig. 2), a securing clip (14) open to the bottom is attached to the bottom side (12) of the loading platform (1) for snapping-in the pole (11).

4. Cart according to Claim 2 or 3,
**characterised in that** the pole grip (15) in the folded-in position of the pole (11) does not project further from the bottom side (12) than the outermost shank of each bearing fork (3, 3') in the folded-in position.

5. Cart according to one of the preceding claims,
**characterised in that** the swivel mount (9) in the area of each bearing fork (3') exhibits a U-shaped recess (28, 29) for receiving the bearing fork (3') in a folded position (Fig. 2).

6. Cart according to one of the preceding claims,
**characterised in that** the swivel mount (9) on its front end exhibits a downwardly offset bulge (10) for vertical pivotable mounting of the pole (11), the pole pivot point (39) being located below the lower side (12) of the loading platform.

7. Cart according to one of the preceding claims,
**characterised in that** each bearing fork (3, 3') includes between its shanks a substantially U-shaped recess (22) for receiving respectively one foldable wheel (2, 2') and a cylindrical mounting bore (46), extending perpendicular thereto and parallel to the centre plane of the foldable wheel, for receiving the fixed bearing fork pivot axle (4, 4'), via which the bearing fork (3, 3') is mounted for rotation via the mounting bore (46).

8. Cart according to Claim 7,
**characterised in that** each bearing fork pivot axle (4, 4') is mounted on the bottom side (12) of the loading platform (1) via at least one securing element (5, 5') and threaded bolts (48) introduced through screw holes (8).

9. Cart according to one of the preceding claims,
**characterised in that** the bearing fork blocking element (7, 7') is disc-shaped and includes indentations (23, 24, 25) on its circumferential rim, between which curved segments (26, 27) extend, and in which a pre-tensioned spring-biased detent-element (6) can engage during the rotation of the bearing fork, which detent element can be manually lifted out of the respective indentation (23, 24, 25) and with repeated rotation of the bearing fork (3, 3') can slide over a curved segment (26, 27) and engage in the next adjacent indentation (23, 24, 25).

10. Cart according to Claim 9,
**characterised in that** three indentations (23, 24, 25), offset respectively by 90°, and two curved segments (26, 27) located therebetween are provided.

11. Cart according to Claim 10,
**characterised in that** the three indentations (23, 24, 25) respectively correspond to two opposite folded positions and an operating position, located therebetween, of the bearing forks (3, 3').

12. Cart according to one of Claims 9 to 11,
**characterised in that** the detent element (6) is designed as a leaf spring, one end of which is secured to the bearing fork (3, 3') and the other end of which carries a finger protection cap (45).

13. Cart according to one of the preceding claims,
**characterised in that** all bearing forks (3, 3') with folding wheels (2, 2'), mounting hardware (4, 4'; 5, 5'; 46) and locking devices (6, 7, 7') have the same design.

14. Cart according to one of the preceding claims,
**characterised in that** the loading platform (1) includes oval apertures (17, 17', 18) serving as handgrips close to various side edges (31, 33, 34).

15. Cart according to one of the preceding claims,
**characterised in that** the loading platform (1) exhibits side edges (34) running diagonally towards each other towards the front.

16. Cart according to Claim 15,
**characterised in that** the forward foldable wheels (2') in their outwardly folded position project beyond the diagonal side edges (34), however not beyond the straight edges (33) defining the greatest width of the loading platform (1).

17. Cart according to one of the preceding claims,
**characterised in that** one or more flat, hollow boxes (37) are secured on the bottom side (12) of the loading platform (1), the boxes (37) not projecting further from the bottom side (12) than the folded-in bearing forks (3, 3').

18. Cart according to one of the preceding claims,
**characterised in that** the loading platform (1) includes holes (20) for securing goods being transported on the loading platform (1).

19. Cart according to one of the preceding claims,
**characterised in that** anti-skid strips (30) project slightly from the upper side of the loading platform (1).

20. Cart according to one of the preceding claims,
**characterised in that** respectively one spacer disk (40') is inserted between the bottom side (12) of the loading platform (1) and the securing element (5) for the rear bearing fork pivot axles (4), through which spacer disks threaded bolts (48) are passed and the thickness of which approximately corresponds to the thickness of the swivel mount (9).

21. Cart according to one of Claims 1 to 8 and/or 13 to 20,
**characterised in that** a guide element (55) is fastened to the bearing fork pivot axle (4, 4') axially outside each bearing fork (3, 3'), which guide element includes radially outside the bearing fork pivot axle (4, 4') at least one hollow cylindrical recess (56) into which a securing bolt (57) can be received by sliding, the tip segment (58) of which can be introduced into at least one hollow cylindrical recess (59) of the respective bearing fork (3, 3') by axial displacement of the securing bolt (57).

22. Cart according to Claim 21,
**characterised in that** the bearing fork (3, 3') is releasably securable in the operating position and at least one folded-in position.

23. Cart according to Claim 21 or 22,
**characterised in that** three hollow cylindrical recesses (59), respectively offset by 90°, are provided in each bearing fork (3, 3').

24. Cart according to Claim 23,
**characterised in that** the three recesses (59) respectively correspond to two opposite folded positions and an operating position, located therebetween, of the bearing forks (3, 3').

25. Cart according to Claim 21 or 22,
**characterised in that** two or three hollow cylindrical recesses (56), respectively offset by 90°, are provided in the guide element (55), and a recess (59) is provided in the bearing fork (3, 3') for receiving the tip segment (58) of the securing bolt (57).

26. Cart according to one of Claims 21 to 25,
**characterised in that** the securing bolt (57) includes a collar (60) provided within the recess (56), which is biased in the direction of the tip segment (58) of the securing bolt (57) by a compression spring (61).

27. Cart according to Claim 26,
**characterised in that** the securing bolt (57) includes a widening hand grip (62) outside the recess (56).

## Revendications

1. Chariot de transport comportant une plate-forme de chargement horizontale (1) qui se déplace sur des roues rabattables (2, 2') positionnées chacune sur une fourche de support (3, 3'), et un étrier (11) pouvant pivoter verticalement, chaque fourche de support étant positionnée sur la plate-forme de chargement (1) de manière à pouvoir pivoter autour d'un axe (4, 4') parallèle à la plate-forme de chargement et pouvant être verrouillée dans une position de déplacement en saillie verticale par rapport au dessous (12) de la plate-forme de chargement (1) et dans au moins une position rabattue parallèle à la plate-forme de chargement,
**caractérisé en ce que**
l'étrier pouvant pivoter verticalement est en forme de timon (11) au dessous (12) de la plate-forme de chargement (1) au moyen d'une traverse pivotante (9) pouvant pivoter horizontalement,
le timon (11) est articulé sur la traverse pivotante (9) de manière à pouvoir être rabattu dans une position rabattue parallèle au dessous (12) de la plate-forme de chargement, le timon (11) peut être verrouillé en position rabattue, et
axialement à l'extérieur de chaque fourche de support (3, 3'), un élément de blocage (7,7') de la fourche de support est fixé sur l'axe de rotation (4, 4') de celle-ci, élément qui coopère avec un élément d'encliquetage (6) relié fixement à la fourche de support (3, 3') de manière à ce que la fourche de support (3, 3') puisse être verrouillée de manière amovible dans la position de déplacement et au moins une position rabattue.

2. Chariot de transport selon la revendication 1,
**caractérisé en ce que**
le timon (11) présente une poignée de timon (15) plate qui est coudée contre l'axe (11') du timon (11) de manière à ce que son côté large soit parallèle au dessous (12) de la plate-forme de chargement (1) lorsque le timon est rabattu (fig. 2) et soit plus éloigné de la plate-forme de chargement (1) que l'axe longitudinal (11').

3. Chariot de transport selon la revendication 1 ou 2,
**caractérisé en ce qu'**
une boucle de retenue (14) ouverte vers le bas pour l'encliquetage du timon (11) est fixée sur le dessous (12) de la plate-forme de chargement (1) afin de verrouiller le timon (11) dans la position rabattue (fig. 2).

4. Chariot de transport selon la revendication 2 ou 3,
**caractérisé en ce que**
la poignée de timon (15), lorsque le timon (11) est en position rabattue, n'est pas plus en saillie par rapport au dessous (12) que le bras extérieur de chaque fourche de support (3, 3') en l'état rabattu.

5. Chariot de transport selon l'une quelconque des revendications précédentes,
**caractérisé en ce que**
la traverse pivotante (9) présente, au niveau de chaque fourche de support (3') un évidement (28, 29) en forme de U pour recevoir la fourche de support (3') dans une position rabattue (fig. 2).

6. Chariot de transport selon l'une quelconque des revendications précédentes,
**caractérisé en ce que**
la traverse pivotante (9) présente, sur son extrémité avant, une échancrure (10) coudée vers le bas pour le positionnement pivotant verticalement du timon (11), le point de rotation (39) du timon se trouvant sous le dessous (12) de la plate-forme de chargement.

7. Chariot de transport selon l'une quelconque des revendications précédentes,
**caractérisé en ce que**
chaque fourche de support (3, 3') présente, entre ses bras, un évidement (22) essentiellement en forme de U destiné à recevoir chacun une roue rabattable (2, 2'), et un alésage de palier (46) cylindrique perpendiculaire à la roue rabattable et parallèle au plan médian de celle-ci, destiné à recevoir l'axe de rotation (4, 4') fixe de la fourche de support, qui et qui tient en rotation la fourche de support (3, 3') au moyen de l'alésage de palier (46).

8. Chariot de transport selon la revendication 7,
**caractérisé en ce que**
chaque axe de rotation (4, 4') de fourche de support est monté sur le dessous (12) de la plate-forme de chargement (1) au moyen d'au moins un élément de fixation (5, 5') et de boulons filetés (48) introduits dans des trous de vissage (8).

9. Chariot de transport selon l'une quelconque des revendications précédentes,
**caractérisé en ce que**
l'élément de blocage (7, 7') de la fourche de support est en forme de disque et présente, sur sa bordure périphérique, des encoches (23, 24, 25) entre lesquelles s'étendent des voies recourbées (26, 27) et dans lesquelles un élément d'encliquetage (6) sur ressort précontraint peut s'encliqueter lors de la rotation de la fourche de support (3, 3'), élément d'encliquetage qui peut être soulevé de l'encoche (23, 24, 25) respective manuellement et glisser sur une voie recourbée (26, 27) lors d'une nouvelle rotation de la fourche de support (3, 3') et s'encliqueter dans l'encoche suivante (23, 24, 25).

10. Chariot de transport selon la revendication 9,
**caractérisé en ce qu'**
on prévoit trois encoches (23, 24, 25) décalées respectivement de 90° l'une par rapport à l'autre et deux voies recourbées (26, 27) entre celles-ci.

11. Chariot de transport selon la revendication 10,
**caractérisé en ce que**
les trois encoches (23, 24, 25) correspondent respectivement à deux positions rabattues opposées et à une position de déplacement intercalée de la fourche de support (3, 3').

12. Chariot de transport selon l'une quelconque des revendications 9 à 11,
**caractérisé en ce que**
l'élément d'encliquetage (6) est en forme de ressort à lames dont une extrémité est fixée sur la fourche de support (3, 3') et l'autre extrémité porte un protège-doigts (45).

13. Chariot de transport selon l'une quelconque des revendications précédentes,
**caractérisé en ce que**
toutes les fourches de support (3, 3') sont configurées de manière identique avec des roues rabattables (2, 2'), des paliers (4, 4' ; 5, 5' ; 46) et des dispositifs de verrouillage (6, 7, 7').

14. Chariot de transport selon l'une quelconque des revendications précédentes,
**caractérisé en ce que**
la plate-forme de chargement (1) possède à proximité de différentes bordures latérales (31, 33, 34) des traversées ovales (17, 17', 18) servant de poignées.

15. Chariot de transport selon l'une quelconque des revendications précédentes,
**caractérisé en ce que**
la plate-forme de chargement (1) présente des bordures latérales (34) en biais l'une vers l'autre vers l'avant.

16. Chariot de transport selon la revendication 15,
**caractérisé en ce que**
les roues rabattables avant (2'), dans leur position rabattue vers l'extérieur, dépassent des bordures latérales en biais (34), mais pas des bordures (33) rectilignes incluant la plus grande largeur de la plate-forme de chargement (1).

17. Chariot de transport selon l'une quelconque des revendications précédentes,
**caractérisé en ce qu'**
un ou plusieurs coffres (37) creux et plats sont fixés sur le dessous (12) de la plate-forme de chargement (1), les coffres (37) ne dépassant pas du dessous (12) au-delà des fourches de support (3, 3') rabattues.

18. Chariot de transport selon l'une quelconque des revendications précédentes,
**caractérisé en ce que**
la plate-forme de chargement (1) présente des trous (20) pour l'amarrage des marchandises sur la plate-forme de chargement (1).

19. Chariot de transport selon l'une quelconque des revendications précédentes,
**caractérisé en ce que**
des nervures anti-glissement (30) dépassent légèrement du dessus de la plate-forme de chargement. (1)

20. Chariot de transport selon l'une quelconque des revendications précédentes,
**caractérisé en ce qu'**
un disque d'écartement (40') est inséré entre le dessous (12) de la plate-forme de chargement (1) et l'élément de fixation (5) pour chaque axe de rotation (4) arrière de la fourche de support, disque à travers lequel passent les boulons filetés (48) et dont l'épaisseur correspond approximativement à l'épaisseur de la traverse pivotante (9).

21. Chariot de transport selon l'une quelconque des revendications 1 à 8 et/ou 13 à 20,
**caractérisé en ce que**,
axialement à l'extérieur de chaque fourche de support (3, 3'), un élément de guidage (55) est fixé sur l'axe de rotation (4, 4') de la fourche de support, élément qui, radialement à l'extérieur de l'axe de rotation (4, 4') de la fourche de support, présente au moins un évidement (56) cylindrique creux destiné au logement glissant d'un boulon de verrouillage (57) dont le tronçon en pointe (58) peut être introduit, par translation axiale du boulon de verrouillage (57) dans au moins un évidement (59) cylindrique creux de la fourche de support (3, 3') respective.

22. Chariot de transport selon la revendication 21,
**caractérisé en ce que**
la fourche de support (3, 3') peut être verrouillée de manière amovible dans la position de déplacement et au moins une position rabattue.

23. Chariot de transport selon la revendication 21 ou 22,
**caractérisé par**
trois évidements cylindriques creux (59), décalés de 90° l'un par rapport à l'autre, dans chaque fourche de support (3, 3').

24. Chariot de transport selon la revendication 23,
**caractérisé en ce que**
les trois évidements (59) correspondent respectivement à deux positions rabattues opposées et à une position de déplacement, située entre celles-ci, de la fourche de support (3, 3').

25. Chariot de transport selon la revendication 21 ou 22,
**caractérisé en ce que**
dans l'élément de guidage (55) deux ou trois évidements cylindriques creux (56) sont décalés respectivement de 90° l'un par rapport à l'autre et, dans la fourche de support (3, 3'), un évidement (59) loge le tronçon en pointe (58) du boulon de verrouillage (57).

26. Chariot de transport selon l'une quelconque des revendications 21 à 25,
**caractérisé en ce que**
le boulon de verrouillage (57) présente une collerette (60) située à l'intérieur de l'évidement (56) et sollicitée par un ressort de pression (61) en direction du tronçon en pointe (58) du boulon de verrouillage (57).

27. Chariot de transport selon la revendication 26,
**caractérisé en ce que**
le boulon de verrouillage (57) présente, à l'extérieur de l'évidement (56) une poignée (62) qui s'élargit.
